(19) Europäisches Patentamt
European Patent Office
Office européen des brevets

(11) **EP 4 269 068 A1**

(12) **EUROPEAN PATENT APPLICATION**

(43) Date of publication:
**01.11.2023  Bulletin 2023/44**

(21) Application number: **23169518.0**

(22) Date of filing: **24.04.2023**

(51) International Patent Classification (IPC):
**B29C 51/00** (2006.01)    **B29C 53/00** (2006.01)
**B29C 55/00** (2006.01)    B29C 51/10 (2006.01)

(52) Cooperative Patent Classification (CPC):
**B29C 51/002; B29C 53/005; B29C 55/005;**
B29C 51/10; B29C 2791/006; B29C 2791/007;
B29K 2995/0056; B29K 2995/006; B29K 2995/0062

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.04.2022  NL 2031657**

(71) Applicant: **72P BV**
**2600 Berchem (BE)**

(72) Inventors:
• **Verlinden, Victor**
**1000 Brussel (BE)**
• **Josephy, Bavo**
**9000 Gent (BE)**
• **The other inventors have waived their right to be
thus mentioned.**

(74) Representative: **De Clercq & Partners**
**Edgard Gevaertdreef 10a**
**9830 Sint-Martens-Latem (BE)**

(54) **METHOD FOR SHAPING A MOULDED PLANT PROTEIN-BASED MATERIAL**

(57)    The present application provides a method for shaping a moulded plant protein-based material comprising the steps of (a) providing or manufacturing a moulded plant protein-based material, wherein plant proteins make up the matrix or continuous phase of the moulded plant protein-based material, wherein said moulded plant protein-based material is in the form of a panel, board, sheet or film; (b) subjecting the moulded plant protein-based material to a treatment with a water or alcoholic vapour, such as a steam treatment, thereby creating a softened protein-based material; and (c) deforming the softened protein-based material of step b), preferably to a predetermined shape.

FIG. 1

EP 4 269 068 A1

## Description

### Field

The present application is situated in the field of the manufacture of shaped articles from protein-based materials, particularly by thermoforming.

### Background

Petroleum-based synthetic polymers have achieved widespread use to produce a multitude of products. For instance, furniture, household device components, automotive interior panels, sports articles, gardening tools and packaging articles are commonly produced using synthetic resins. One of today's major trends is to replace these synthetic materials and composites by biobased and/or biodegradable alternatives. One of these alternatives are protein-based bioplastics and composites. The processability and functionality of these protein-based materials differs from the conventional synthetic materials. Different processes have been developed to produce protein-based products. Generally, two categories of these processes are distinguished, i.e. wet processing and dry processing.

Wet processing is done by casting, which involves dispersing and solubilizing the protein in large quantities of solvent followed by solvent removal by drying (e.g. US 6,635,206, US 5,585,060, US 2,285,758, WO2021249621), or by mixing protein powder with water to get a dough or a dough-like mass, and vacuum forming the dough (WO2013184916).

Dry processing involves mixing the proteins and appropriate additives, under moisture conditions typically lower than 25% water on total mass, followed by thermomechanical shaping using compression moulding (e.g. EP1363974B1 and EP2432830B1), extrusion, injection moulding (e.g. US 5,665,152), injection-compression moulding (a.k.a."coining") (e.g. EP2834055B1), or by using proteins that can be melted at atmospheric pressure (e.g. EP3218171 B1).

According to the prior art, formulations based on natural proteins may only be extruded or injection moulded if appropriate additives are included, such as plasticizers such as glycerol. (Verbeek and van den Berg, 2010).

A technique for shaping (bio)plastics is thermoforming. Conventional thermoforming typically consists of three steps:

> (a) providing or making a rigid material, such as by moulding;
> (b) Heating the rigid material to make it more flexible;
> (c) reshaping the heated material of step (b), preferably to a predetermined shape.

Plasticizers are conventionally added to the mixture before or during the moulding step, both for wet and dry processing. Adding plasticizers like glycerol typically permanently reduces the strength and stiffness of the material, and thus affect the type of applications the material is suitable for. Using a plasticizer that can more easily migrate out of the material, such as water, will allow higher strength and stiffness in the final product, but generally leads to shrinking and warping of the material as a consequence of the migration and/or evaporation of the plasticizer after the shaping of the material.

When a strong and stable product shape based on protein materials is required, these techniques do not offer a viable solution. There thus remains a need for improved techniques for forming and shaping protein-based articles, particularly by thermoforming.

### Summary

The present application generally relates to a method for producing shaped articles by thermoforming a protein-based material, wherein the plant protein-based material in the form of a moulded sheet, panel, board or film, is first softened by contacting it with hot vapours, such as water and/or alcoholic vapours or steam. The present inventors have found that the thus obtained softened plant protein-based material has good deformation properties, allowing it to be efficiently shaped in a three-dimensional object, particularly by bending the material and/or stretching it into or onto a mould. Advantageously, the hot vapours only soften the moulded protein-based material temporarily, allowing it to be shaped or deformed by stretching and/or bending it into or onto a mould. Indeed, the hot vapours are contacted with the material after pre-shaping or moulding a protein-based composition into a solid form, allowing fast evaporation of the hot vapours from the softened protein-based material during the shaping step of a thermoforming process, and therefore providing limited degradation of the mechanical properties of the protein-based material in the final shaped product. This is in contrast with adding water or plasticizers to a protein-based composition before pre-shaping or moulding to a solid form, which results in higher levels of these compounds that stay present for a longer time in the material, which negatively affects the material properties of the protein-based material in the final shaped product.

Accordingly, the invention relates to 3D shaped protein-based objects and methods for shaping a moulded plant protein-based material by thermoforming comprising subjecting the moulded protein-based material to a treatment with hot vapours such as a hot water or alcoholic vapour or steam, thereby creating a softened plant protein-based material; and subsequently reshaping and/or deforming the softened plant protein-based material into a predetermined shape, particularly by bending or stretching the material into or onto a mould.

In a first aspect, the present application provides a method for shaping a moulded or preformed plant protein-based material comprising the steps of:

(a) providing a moulded plant protein based material in the form of a panel, board, sheet or film, wherein, in the moulded plant protein based material, plant proteins make up the matrix or continuous phase of the moulded protein-based material, and wherein the protein-fraction is non-melting under atmospheric pressure;

(b) subjecting the moulded plant protein-based material in the form of a panel, board, sheet or film to a treatment with a vapour, such as a water or alcoholic vapour or steam, with the vapour having a temperature of at least 60°C, thereby creating a softened plant protein-based material, (c) reshaping the softened plant protein-based material of step (b), preferably to a predetermined shape, by bending or stretching the softened plant protein-based material of step (b) into or onto a mould; wherein the moulded plant protein-based material is heated to a temperature of at least 60°C during step (b) or step (c).In certain embodiments, the moulded protein-based material is in the form of a panel, board, sheet or film with a thickness varying from 0.1mm to 50mm.

In certain embodiments, the moulded plant protein-based material has a maximum tensile strength of at least 3 MPa, and an elongation at break before the vapor treatment of maximum 50%, particularly maximum 40%, as determined by ISO527-2:2012.

In certain embodiments, the moulded plant protein-based material comprises 30-100 wt.% plant protein, 0-50 wt.% of a fibre and/or filler, and 0-20 wt.% of one or more functional additives selected from the group consisting of a cross-linking or chemical bonding agent, a colouring agent, a lubricant, an antioxidant, an antistatic agent, a biocide or a preserving agent, a plasticizer, a flame retardant or a UV stabilizer, with wt.% based on the total weight of the material.

In certain embodiments, the method further comprises the step of preparing the moulded plant protein-based material prior to or during step (a), comprising the steps of either:

(i) preparing a plant protein-based composition with a dough-like consistency, comprising 30-100 wt.% of a plant protein source, 0-50 wt.% of a fibre and/or filler source and 0-50 wt.% water, with wt.% based on the total weight of the composition; and (ii) converting the plant protein-based composition into a moulded plant protein-based material in the form of a panel, board, sheet or film, by applying pressure and heat; or

(i) preparing a dry protein-based composition comprising 30-100 wt.% of a plant protein source, 0-50 wt.% of a fibre and/or filler source and 0-25 wt.% water, with wt.% based on the total weight of the composition; and (ii) converting the plant protein-based composition into a moulded plant protein-based material in the form of a panel, board, sheet or film, by applying pressure and heat, and/or solvent suspension and subsequent drying.

Particular examples of plant proteins include a source of cereal protein, for instance wheat or corn protein, such as commercial gluten, wheat gluten, and corn gluten, dried distilled grains and solubles (DDGS), brewer's spent grain or cereal germs; a source of leguminous protein, such as a meal, a flour or protein isolate from soybeans, peas or a pulse crop, or defatted oil seeds cake.

A particularly preferred plant protein is a commercial gluten, a wheat gluten, or a corn gluten.

In certain embodiments, at least 50% of the plant protein is insoluble in water.

In particular embodiments, the plant protein-based material comprises at least 3 wt.% of a fibre and/or a filler. The fibre may be a cellulosic or hemicellulosic fibre. The fibre may be derived from vegetable material. The fibre may also be a flexible fibre, such as wool. The filler may be carbon black or biochar, cellulosic flour such as wood flour or olive stone flour, or micro- and nano-cellulose.

In particular embodiments, step b) comprises (i) contacting the moulded protein-based material with water vapour or with ethanol vapour with a temperature of at least 60°, particularly a temperature of at least 70 °C; or (ii) contacting the moulded protein-based material with steam. In certain embodiments, the moulded protein-based material is contacted with steam at a pressure above atmospheric pressure. In certain embodiments, step b) may further comprise heating the protein-based material, particularly during or after the material has been contacted with the water vapour, steam or the ethanol vapour. In particular embodiments, step b) may be performed for a period ranging from 1 minute to 6 hours for materials of thickness of 0.1 mm to 50 mm, such as of a thickness of 1 mm to 30 mm. Depending on the thickness of the material, the process will need more or less time, based on the speed of diffusion of moisture or steam and of diffusion of heat in the material.

In particular embodiments, step c) comprises the step of c1) deforming at least a portion of the softened plant protein-based material, obtained in step b), and the step of c2), while deformed, cooling and/or drying the softened plant protein-based material to cause retention of the shape. In certain embodiments, in step c1), the temperature of the softened plant protein-based material ranges between 60 °C and 170 °C, particularly between 70 °C and 130 °C.

In particular embodiments, step c1) of deforming at least a portion of the softened plant protein-based material is performed during step b) of softening the protein-based material.

In particular embodiments, the method as envisaged herein comprises thermoforming by vacuum thermoforming or by pressure thermoforming.

It is further understood that the shaped plant protein based material obtained after step c), in particular after step c2) has a maximum tensile strength and modulus of elasticity that deviates maximum 25% from the maximum tensile strength and modulus of elasticity of the provided moulded plant protein based material from step a).

Another related aspect of the present application relates to a three-dimensional (3D) shaped, thermoformed plant protein-based object or product obtained by a method according to the present application. In particular embodiments, said 3D shaped, thermoformed plant protein-based object or product is obtained by shaping a steam treated moulded protein-based material as discussed elsewhere herein.

In certain embodiments, the 3D shaped, thermoformed plant protein-based object or product as envisaged herein is a product selected from the group consisting of wall panels, ceiling panels, floor panels, coat hangers, - alternative for clay targets, furniture, household device components, printed circuit board substrates and other electrical device components, automotive interior panels, sports articles, gardening tools, capsules, packaging, or single use items such as trays, cups, straws, cutlery.

Another related aspect of the present application relates to the use of the method according to any one of the embodiments of the methods of the present application for the preparation of shaped plant protein-based moulded articles, such as articles selected from wall panels, ceiling panels, floor panels, coat hangers, alternative for clay targets, furniture, household device components, printed circuit board substrates and other electrical device components, automotive interior panels, sports articles, gardening tools, capsules, packaging, or single use items such as trays, cups, straws, cutlery.

## Description of the Figures

FIG. 1 presents a flow chart of a process for shaping a moulded plant protein-based material to a 3D shaped plant protein-based object, according to the present application.
FIG. 2 presents Scanning Electron Microscope images of an embodiment of a moulded plant protein-based material as envisaged herein (2A); an embodiment of a softened plant protein-based material as envisaged herein prior to tensile testing (2B); and the softened plant protein-based material after tensile testing and failure of the sample under high magnification (2C) and lower magnification (2D).

## Detailed description

Before the present system and method of the invention are described, it is to be understood that this invention is not limited to particular systems and methods or combinations described, since such systems and methods and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints. Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any $\geq 3$, $\geq 4$, $\geq 5$, $\geq 6$ or $\geq 7$ etc. of said members, and up to all said members.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, in the appended claims, any of the claimed embodiments can be used in any combination.

In the present application, the percentages are given by weight, unless otherwise stated.

In the context of the present application, the term "moulded" or "moulded sheet" or "preformed" or "preformed sheet" generally refers to a solid object or sheet having a stable shape under regular conditions, this means that the material has a solid shape and is not a fluid, a dough-like or a powdered material, in particular at atmospheric pressure, at temperatures between 15°C and 25 °C and without any external loads or forces acting upon the object or sheet. The "moulded" material or "moulded sheet" or "preformed" or "preformed sheet" material can be formed by applying pressure and heat or by solvent suspension and subsequent drying, i.e. a process also known as casting. Particular embodiments of "moulded" or "moulded sheet" materials or "preformed" or "preformed sheet" are in the form of a panel, board, sheet or film.

In the context of the present application, the term "thermoforming", "thermoforming process" or "thermoformed" generally refers to a process comprising the steps of softening a moulded material and subsequently deforming the softened moulded material, particular by bending or stretching the material into or onto a mould. Typically, a planar substrate with an extension in the x-y plane and only its planar thickness in the z-direction, is pressed such that the formed object also has an additional formed extension in the z-direction. Typically, the material is allowed to harden in the deformed shape. In specific embodiments, this comprises thermoforming by vacuum thermoforming or by pressure thermoforming. The term "thermoforming" may specifically refer to the forming step of a thermoforming process, i.e. the step of reshaping and/ or bending of a softened moulded material.

In the context of the present application, the term "non-melting" is used in the meaning that, as the temperature is raised under atmospheric pressure, the "non-melting" material does not melt to a liquid, or a melting endotherm cannot be observed via DSC measurement, but the material rather softens slightly and at higher temperatures undergoes a thermal decomposition. The plant protein-based material as considered herein typically undergoes a thermal decomposition at temperatures of about 170°C and higher.

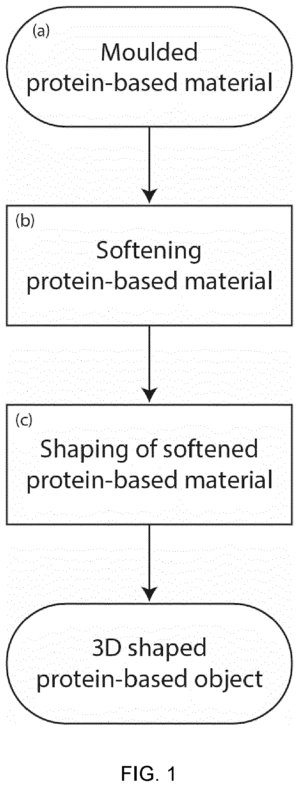

The inventors have developed a novel process to produce three-dimensional products by thermoforming a protein-based material, in particular a plant protein-based material, thereby providing a biobased and biodegradable alternative to fossil-based products. In the process, hot vapours and steams such as water vapour, or steam or alcohol vapours and steams, are used to soften the plant protein-based material, without significantly affecting the final product strength and material properties, and the softened plant protein-based material is subsequently shaped in its final form, particularly by the shaping step in a thermoforming process. The different steps of a method according to the present application are schematically shown in FIG 1. A moulded plant protein-based material as further discussed herein is first subject to a softening treatment, as further discussed herein. The softened moulded plant protein-based material is then subject to a shaping step, particularly to a shaping step of a thermoforming process, thus obtaining a 3D shaped plant protein-based object or product.

In a first aspect, the present application thus provides a method for preparing a three-dimensional product by shaping or thermoforming a moulded protein-based material, comprising the steps of

(a) providing or preparing a moulded protein-based material, particularly a plant protein based material, as further defined herein;
(b) subjecting the moulded protein-based material to a treatment with a vapour such as water or alcoholic vapour or steam, with the vapours having a temperature of at least 60°C, thereby creating a softened protein-based material; and
(c) shaping the softened protein-based material of step (b) in a final form, preferably to a predetermined shape, particularly by bending or stretching the softened protein-based material of step (b) into or onto a mould;

wherein the moulded protein-based material is heated to a temperature of at least 60°C during step (b) or step (c).

The use of water or alcohol vapours with a high partial pressure of water or alcohol in softening step (b) allows for a quicker and more efficient softening of the protein-based material, with a limited water or alcohol uptake, compared to a softening process comprising contacting or submersion of the moulded protein-based material in liquid water or alcohol. It is understood that the treatment with a water vapour, steam or an alcohol vapour does not dissolve or extract the plant proteins in the plant protein based material. Stated differently, the protein content of the softened plant protein based material (of step b) and of the shaped plant protein based material (obtained in step c) is essentially the same as the protein content of the moulded plant protein based material of step (a), with typically a less than 1% difference in protein content (expressed on dry matter).

In the context of the present application, the term "protein-based material" is used in the meaning that the proteins present in the protein-based material make up the matrix or continuous phase of the protein-based material. Furthermore, the moulded protein-based material is in the form of a panel, board, sheet or film, more in particular having a thickness between 0.1 mm and 50 mm, or between 0.1 mm and 30 mm, such as between 1 mm and 20 mm, between 2 mm and 20 mm or between 3 mm and 10 mm. The moisture content of the moulded protein-based material is typically between 5 and 15 wt.%, such as between 5 and 10 wt.% for materials stabilized at 25°C and 50% relative humidity. As further discussed herein, the protein-based material is a plant protein based material.

In the context of the present application, the sentence "(plant) proteins make up the matrix or continuous phase of the moulded protein-based material" is in the meaning that the (plant) proteins are responsible for the bonds that keep the material together. The proteins in the protein-based materials in this invention are the biopolymers that form the bonds in the material, without the need of another polymer, plastic or resin to add strength. In certain embodiments, the moulded plant protein-based material has a maximum tensile strength of at least 3 MPa, and an elongation at break before the vapor treatment of maximum 50%, particularly maximum 40%, as determined by ISO527-2:2012. It is understood that the moulded plant protein-based material provided is a stiff and hard material. Advantageously, the shaping process according to the present application does not significantly affect the strength and material properties of the shaped product (obtained after step c) compared to strength and material properties of the moulded plant protein based material (provided in step a). Stated differently, the shaped material obtained in step c) has a maximum tensile strength and modulus of elasticity that deviates maximum 25%, or even maximum 20% from the maximum tensile strength and modulus of elasticity of the provided moulded plant protein based material from step a), as particularly determined by a tensile test according to ISO527-2:2012.

The plant protein-based material may be a composite material, further comprising a fibre and/or a filler, as further specified herein. Advantageously, the plant protein-based material is derived from natural sources, such as protein rich and/or fibre-rich waste streams from agriculture, forestry, food processing and the like. In some embodiments, the plant protein-based material comprises less than 20 wt.% of a plasticizer different from water, such as glycerol or another plasticizer known to the skilled person, such as between 0 and 20 wt.%, between 0 and 15 wt.%, or between 0 and 10 wt.%, with wt.% based on the total weight of the material.

In certain embodiments, step a) comprises providing a moulded plant protein-based composition comprising 10-100 wt.% or 30-100 wt.% of a protein source, 0-90 wt.% or 0-50 wt.% of a fibre and/or filler source and 0-50 wt.% water, such as between 0-25 wt% water, with wt.% based on the total weight of the composition, wherein the plant protein-based composition is in the form of a panel, board, sheet or film.

In particular embodiments, step (a) comprises the steps of

(a1) preparing or manufacturing a plant protein-based composition comprising 10-100 wt% or 30-100 wt.% of a plant protein source, 0-90 wt% or 0-50 wt.% of a fibre and/or filler source and 0-50 wt% water, or preparing or manufacturing a plant protein-based composition comprising 10-100 wt% or 30-100 wt.% of a plant protein source, 0-90 wt% or 0-50wt.% of a fibre and/or filler source and 0-25 wt% water; and

(a2) converting the plant protein-based composition into a moulded protein-based material by applying pressure and heat, particularly by compression moulding or extrusion, or by solvent suspension and subsequent drying.

These plant protein sources may be used in their natural form, i.e. as isolated from the vegetable or plant, or they may be subject to a pre-processing step, as known to the skilled person. Particular pre-processing treatments of a protein source include grinding or crushing, defatting and/or (partial) extraction. In certain embodiments, the protein source is a defatted protein fraction, particularly of an oil-rich plant material. In certain embodiments, the protein source is an extracted or partially extracted protein fraction, such as an ethanol, water or salt extract of a protein source, or the residue of such extraction. As proteins can be fractionated using different solvents, such as ethanol, water or salt water specific protein fractions or subpopulations are obtainable. In certain embodiments, the protein source is a milled or crushed protein fraction. The protein sources considered herein may comprise other biopolymers, such as starch, cellulose, or hemicellulose, as minor components.

Vegetable or plant protein sources particularly include a source of cereal proteins or a source of leguminous proteins. These protein sources are abundantly available, renewable and inexpensive. These protein sources typically comprise other biopolymers, such as starch, cellulose, or hemicellulose, as minor components.

Cereal proteins and sources thereof typically include wheat gluten, such as commercially available wheat gluten; corn gluten; cereal germs; defatted cereal germs; corn zein or corn gluten meal; rice protein; brewer's spent grain; barley proteins; sorghum proteins; dried distilled grains and solubles (DDGS). Wheat gluten particularly refers to the main protein component of wheat flour, comprising the gliadins and glutenins. Commercial gluten or commercial wheat gluten is a type of wheat gluten that has been extracted from wheat flour. Corn gluten particularly refers to main protein component of corn, comprising zein. Corn gluten may be obtained as a byproduct of corn milling.

Leguminous proteins and sources thereof include a meal, an extracted or partially extracted meal, a flour or a protein isolate from soybean, peas, beans, lupine or a pulse crop.

Other vegetable protein sources include defatted oil seeds cake, such as defatted canola meal, rapeseed meal, or sunflower meal. Other, less abundant protein sources, such as proteins from nuts or duckweed, may be considered as well.

In certain embodiments, the protein-based material comprises 50-100 wt.% or 75-100 wt.% of a protein source and 0-50wt.% or 0-25wt.% water.

In certain embodiments, at least 50%, more in particular at least 60% or at least 70%, such as at least 80% or at least 90% or 95% of the plant protein in the moulded plant protein based material is insoluble in water. Stated differently, less than 50%, 40%, 30%, 20%, or even less than 10% or 5% of the protein nitrogen content of the moulded plant protein based material can be recovered in a water extract of a (ground) sample of the moulded plant protein based material.

In particular embodiments, the plant protein-based material comprises a fibre or filler, such as at least 3 wt.% or at least 5 wt.% of a fibre or filler, for example to reinforce the composite.

The inventors found that the addition of at least 3 wt% of fibre or filler improves the material strength after thermoforming and may avoid the formation of cracks on the surface of the thermoformed material, particularly during storage. More in particular, the plant protein-based material comprises 75-95 wt% of a plant protein source and between 3 and 10 wt% of a fibre or filler.

The fibre may be a commonly used fibre in (synthetic) plastics and resins such as polypropylene fibre, glass fibre, carbon fibre, basalt fibre, or others. The fibre may also be a cellulosic or hemicellulosic fibre. The fibre may be derived from vegetable material. The fibre may also be a flexible fibre, such as wool. In particular, the fibre or fibre source may be a product or by-product from agriculture. A particular cellulosic or hemicellulosic fibre source is a wood-based material, such as wood chips, sawdust or wood flour. Particular vegetable and/or (hemi)cellulosic fibre material may be obtained from whole plants or from various parts thereof, for example stems, stalks, foliage, roots, shoots, bulbs, tubers, fruits or nuts, parts of fruits such as shells, pulp and kernels, seeds, seed-pods, husks, hulls and the like. It is not, in general, necessary to isolate the vegetable fibre per se. Thus, the fibre source may be in any suitable form, e.g. grits, flakes, flour or meal. Plants from which the vegetable fibre or a source thereof may be obtained include, for example, plants belonging to the *Poaceae* family, particularly cereal plants; plants having oil-bearing fruit or seeds, such as soybean, coconut, oil palm, sunflower, ground nut (peanut), safflower, olive, rape (canola) and the like; leguminous plants; plants yielding textile fibres, such as cotton, flax, jute, hemp and ramie. Particular sources of vegetable fibre include meal products of the oilseed-processing industry, e.g. rapeseed meal, soybean meal and sunflower meal, sunflower hulls, cocoa by-products (especially cacao bean shell), flax shives, barley husk or, wheat bran. These fibre sources are generally abundant, renewable and inexpensive.

The fibre or source of fibre may be subject to a pre-treatment, such as a size reduction step, such as by grinding. While the size of the fibre is not particularly limiting and may depend on the application, the fibres may range in size between 0.05 or 0.1 mm and 5 cm or higher, such as between 0.5 mm and 2 cm.

In certain embodiments, the fibres are present in the plant protein-based material in a random arrangement. The use of fibres in the protein-based material can improve the material properties and improve the processing of the protein-based material, such as an improvement in the moisture infiltration during the treatment with liquids or vapours and a more balanced moisture level across the thickness of the material after forming, thereby reducing moisture induced cracking. The addition of fibres can also result in improved impact strength and lower crack formation in the material after forming due to lower residual stresses in the material. In this case, in particular embodiments, the protein-based composition particularly comprises at least 60 wt.% of plant protein or a plant protein source, more in particular at least 70 wt.% or at least 75 wt.% of plant protein or a plant protein source, such as at least 80 wt.% of plant protein or a plant protein source and between 3 wt.% and 30 wt.% of a fibre or fibre source with fibres in a random arrangement, such as between 5 wt.% and 25 wt.% of a fibre or fibre source or between 5 wt% and 10 wt.% of a fibre or fibre source.

In certain embodiments, the fibres are present as a fibre mat, or as a unidirectional (UD) fibre. Advantageously, this may improve the material properties of the protein-based material and improve the processing of the protein-based material, in addition to aforementioned improvements from fibres in random arrangement, fibre mats and UD fibres can also significantly improve stiffness, ultimate tensile and bending strength. In this case, the protein-based material may be manufactured with lower amounts of the protein source. In particular embodiments, the protein-based composition comprises between 10 wt.% and 70 wt.% of plant protein or a plant protein source, such as between 10 wt.% and 60 wt.% or between 10 wt.% and 50 wt.% of plant protein or a plant protein source, and between 10 wt.% and 70 wt.%, or between 20 and 50 wt.% of a fibre or fibre source, wherein the fibre source comprises unidirectional fibres or a woven fibre mat.

In particular embodiments, the protein-based material comprises a filler, such as at least 3 wt.% of a filler.

Particularly preferred fillers are carbon black or biochar. They may be used as a reinforcing filler and also provides a black colour to the protein-based material. Other preferred fillers are cellulosic flour such as wood flour or olive stone flour, or micro- and nano-cellulose. These can, similar to the random oriented fibres, improve the impact strength of the material.

In particular embodiments, the plant protein-based composition and the corresponding plant protein-based material as envisaged herein may further comprise one or more functional additives, to aid in the processing of the protein-based composition or the moulded plant protein-based material and/or to confer a desired functionality to the material. These functional additives are typically present in the protein-based composition in a concentration between 0.01 and 20 wt.%, based on the total weight of the composition. Examples of such functional additives include a cross-linking or chemical bonding agent (e.g. a polyaldehyde), a colouring agent, a lubricant, a surfactant, a plasticizer an antioxidant, an antistatic agent, a biocide or a preserving agent, a flame retardant or a UV stabilizer. In some embodiments, the plant protein-based material comprises less than 20 wt.% of a plasticizer different from water, such as glycerol, such as between 0 and 20 wt.%, between 0 and 15 wt.%, or between 0 and 10 wt.%, with wt.% based on the total weight of the material. Advantageously, the addition of low amounts of plasticizers only has a limited effect on the strength and stiffness of the protein-based material, and allows a wide range of applications of the final 3D-shaped product.

As envisaged herein, the plant protein composition may be prepared by mixing the different components, including protein source, fibre/filler source and/or functional additives with or without water. The moulded plant protein-based material as envisaged herein is obtained by subjecting the plant protein composition to a pressure and heat treatment or solvent suspension, and optionally an active or passive drying step. Typically, the material is put in a mould such that a moulded material is formed. In particular embodiments, the moulded plant protein-based material has the form of a panel, board, sheet or film, as generally known to the skilled person. Typical pressures ranging between 4 and 40 bar are applied at a temperature ranging between 100°C and 175°C for a pressure and heat treatment. In certain embodiments, the moulded protein-based material is obtained by compression-moulding of the wet (dough-like) or dry protein composition as envisaged herein. It is understood that the amount of intermolecular bonds between the proteins, such as disulphide bonds, and, thus the properties of the moulded protein-based material, may be influenced by the temperature and pressure treatment. For instance, compression at higher temperatures, such as at temperatures between 140°C and 170 °C, typically yields a stiffer protein-based material, compared to compression at lower temperatures, such as between 110°C and 125°C. In certain embodiments, compression at lower temperatures and the resulting more flexible moulded protein-based material may be beneficial for the thermoforming process.

In the method as envisaged herein, the moulded plant protein-based material, particularly the moulded plant protein-based material in the form of a form of a panel, board, sheet or film, is subject to a softening process, by subjecting the moulded plant protein-based material to a treatment with a water or alcoholic vapour having a temperature of at least 60°C. The combination of heat and water or heat and alcohol, particularly ethanol, results in the softening of the protein-based material, making it malleable for the subsequent thermoforming step. Advantageously, any water or alcohol (ethanol) absorbed by the moulded protein-based material during the softening step can easily be removed by drying, particularly after the thermoforming step, thereby restoring the strength and stiffness of the protein-based material. Also, the use of hot vapours, such as water vapour or steam, improves the flow and malleability of the plant protein-based material by the combined effect of an increased temperature and a faster penetration of the water or alcohol into the protein-based material. The downside of using liquids such as hot water or alcohol mixtures (instead of vapours), is the slower penetration and the higher levels of moisture needed to obtain similar deformations. This implies longer drying times and slower production.

In particular embodiments, the moulded plant protein-based material is contacted with ethanol vapour having a temperature of at least 60 °C, particularly having an absolute vapour pressure of ethanol of at least 0.25 bar or at least 0.30 bar. In certain embodiments, the moulded protein-based material is contacted with a gas mixture which is at least 80%, preferably at least 90%, such as at least 100% saturated with ethanol, wherein the gas mixture has a temperature of at least 50 °C, or at least 60 °C. As ethanol is a known solvent for a specific protein fraction (prolamins), this may contribute to the softening effect.

In particular embodiments, the moulded plant protein-based material is contacted with water vapour having a temperature of at least 60 °C, particularly having an absolute vapour pressure of water of at least 0.12 bar or at least 0.20 bar, more in particular a saturated water vapour. In particular embodiments, the moulded protein-based material is contacted with steam. The steam may be provided at atmospheric pressure or at a pressure between atmospheric pressure and 2, 3, 4, 5, 6 or 7 atm. Water (steam) is an inexpensive compound, with a limited ecological impact. In certain embodiments, the moulded plant protein-based material is contacted with a gas mixture which is at least 80%, preferably at least 90%, such as at least 100% saturated with water, wherein the gas mixture has a temperature of at least 50 °C, or at least 60 °C. Advantageously, this way, drying/dehydration of the moulded protein-based material after deformation is avoided or limited.

In particular embodiments, the moulded plant protein-based material is first contacted with water vapour or alcohol vapour having a temperature of at least 60 °C, particularly having an absolute vapour pressure of the alcohol of at least 0.25 bar or at least 0.30 bar, as discussed above, and is subsequently further heated. Advantageously, by combining a heat and moisture/alcohol treatment step at a lower temperature with a second heat treatment at a higher temperature, the generally rapid rate of heating the material and the more slowly rate of moisture or alcoholic vapour absorption of the material can be optimized. Accordingly, in particular embodiments, step (b) comprises the steps of (b1) subjecting the moulded plant protein-based material to a treatment with a water or alcoholic vapour having a temperature of at least 60°C, particularly at a temperature between 60°C and 100°C; and (b2) further heating the moulded plant protein-based material obtained in step (b1), particularly for a period between 1 and 15 min, more in particular for a period between 2 min and 10 min. The heating step may be performed by irradiation, by convection (with hot air) or by microwave or electric resistance heating.

It is understood that the time of the treatment of the moulded plant protein-based material with an aqueous or alcoholic vapour as envisaged herein depends *inter alia* on the properties of the vapour, such as temperature and pressure, and the thickness of the protein-based material. In general, the treatment time, such as the steam time, can be reduced with higher temperatures and pressures. However, it may be advantageous to apply temperatures below 100 °C and atmospheric conditions, as no pressure vessel is needed to treat the protein-based material. In certain embodiments, step (b) is performed for a period ranging from 1 minute to multiple hours, such as ranging from 1 minute to 1, 2, 3, 4, 5 or 6 hours.

In particular embodiments, step (b) of the method as envisaged herein, is performed with a pressure vessel with steam, with a steam oven or with a steam bag or other known compatible systems to add steam or vapour and heat to solid materials.

In particular embodiments, the softened plant protein-based material obtained in step (b), or in certain embodiments in step (b2), has a temperature of at least 60 °C, more in particular has a temperature between 60 °C and 170 °C or between 60 °C and 160 °C, such as between 70 °C and 130 °C. In particular embodiments, the softened plant protein-based material obtained in step (b) may have absorbed between 0 wt.% and 25 wt.% of water or alcohol (ethanol), such as between 0 wt.% and 15 wt.%, such as between 0 wt.% and 10 wt.%, based on the weight of the moulded protein-based material.

In the method as envisaged herein, the softened plant protein-based material obtained in step (b) is subjected to a shaping or deformation step, wherein at least a portion of the softened protein-based material is formed to a specific, predetermined three-dimensional shape using a mould. The shaping process as envisaged herein may be performed as in vacuum thermoforming or pressure thermoforming, as known to the skilled person.

In particular, step (c) of shaping the softened plant protein-based material comprises the steps of (c1) deforming at least a portion of the softened protein-based material, obtained in step (b), particularly by bending and/or stretching the softened protein-based material into or onto a mould by applying a vacuum or pressure, and the step of (c2), while deformed, cooling and/or drying the softened protein-based material to cause retention of the shape. This may include using vacuum or vapour permeable membranes/moulds to increase the processing speed as the material gets more rigid as it loses moisture and temperature due to evaporation. In certain embodiments, the protein-based material may be contacted with steam or water saturated air at a temperature between 60 °C and 100 °C during the thermoforming process, particularly the shaping step of the thermoforming process, to avoid excessive dehydration and cooling of the material during thermoforming, which may negatively affect the properties of the shaped product.

In certain embodiments, the shaping step may be performed during the softening step (b), such as during heating and steaming of the moulded protein-based material.

Another related aspect of the present application relates to a three-dimensional shaped, thermoformed plant protein-based material. In particular embodiments, the 3D shaped, thermoformed protein-based material is obtained by a method according to an embodiment of the present application. Advantageously, the (softened) protein-based material has good tensile properties allowing it to be shaped and stretched by thermoforming to obtain complex 3D-shaped articles. The thermoforming process of the protein-based material, in particular the stretching of the softened protein-based material into or onto a mould, results in a non-random orientation of the material matrix, in particular in a material matrix which is orientated in the stretch direction. This can be visualized by Scanning Electron Microscopy (SEM). It also affects the surface topology of the protein-based material, which can be analysed by Atomic Force Microscopy (AFM).

In certain embodiments, the 3D shaped, thermoformed plant protein-based object or product as envisaged herein is a product such as wall panels, ceiling panels, floor panels, coat hangers, alternative for clay targets, furniture, household device components, printed circuit board substrates and other electrical device components, automotive interior panels, sports articles, gardening tools, capsules, packaging, or single use items such as trays, cups, straws, cutlery.

The process as envisaged herein is particularly suited for the manufacturing of three-dimensional protein-based articles such as wall panels, ceiling panels, floor panels, coat hangers, alternative for clay targets, furniture, household device components, printed circuit board substrates and other electrical device components, automotive interior panels, sports articles, gardening tools, capsules and packaging.

## Examples

### Example 0 - Properties of the untreated. moulded protein-based material

Moulded protein-based materials based on wheat gluten are subjected to a tensile test. These tests are performed at room temperature without pre-treatment to the samples. Before testing, the samples are first conditioned at 20°C and 60% relative humidity.

Dog bone or dumbbell samples according to the ISO 527-2:2012 type 1B geometry (with overall length of dumbbells= 150mm) were cut out of a moulded sheet of the protein-based material (standard thickness 4mm). The protein-based material was obtained by compression moulding a commercial gluten sample at 150°C, which was then sanded and shaped.

(a) Without additives. The protein-based material (dumbbell) is moulded from only wheat gluten proteins.
(b) With 20% plasticizer (glycerine). A known plasticizer (glycerine) is mixed with wheat gluten proteins prior to moulding in proportion 20/80 wt%.

Each sample was subject to a tensile test on a calibrated and balanced Instron 5544 single-column tensile tester according to ISO527-2:2012 with a test-speed of 1mm/min for the results presented in table 0 and a speed of 500mm/min for all other tests presented in this document. For each test, the average extent of extension or elongation at break (in mm and in %), and the average maximal tensile strength (in N/mm$^2$) were determined. The average extension or elongation at break in % is calculated as follows:

$$\left( \frac{\text{extension at break (mm)}}{\text{initial length between clamps (mm)}} - 1 \right) * 100 \; (\%).$$

Table 0 - properties of moulded protein-based material

| Sample | Extension at break (mm) | Extension at break (%) | Max tensile strength (N/mm$^2$) |
|---|---|---|---|
| Without additives | 3.1 | 2.8 | 17.7 |
| With 20% plasticizer (glycerine) | 35.6 | 32.4 | 4.8 |

### Example 1. Softening the protein-based material

Samples of a moulded protein-based material based on wheat gluten were subjected to different treatments for evaluating the deformability and malleability of the softened protein-based material.

To this end, dog bone or dumbbell samples according to the ISO 527-2 type 1B geometry (with overall length of dumbbells= 150mm) were cut out of a moulded sheet of the protein-based material (standard thickness 4 mm, but samples of 2 and 6 mm were used as well). Unless stated otherwise, the moulded protein-based material was obtained by compressing moulding a commercial gluten sample at 150 °C, which was then sanded and shaped.

After subjecting the samples to the different treatments, each softened dog bone sample was subject to a tensile test on a calibrated and balanced Instron 5544 single-column tensile tester at high speed (500mm/min) to simulate the deformation during thermoforming and to limit evaporation and cooling during the tensile test. For each test, the average extent of extension at break (in mm), the average maximal tensile strength (in N/mm$^2$), and the average weight gain/loss (in %) were determined.

#### 1A - Comparative example - dry heating

Moulded protein-based material dog bones were heated in the oven at 120 °C for 10 min or 20 min, or were heated for 25s in a microwave oven (1100 W), prior to the tensile test. The heating resulted in a reduction of the moisture content. Combined with the low moisture content of the samples this resulted in only a limited deformability, as shown in Table 1 below.

Table 1 - dry heating

| Sample | Extension at break (mm) | Extension at break (%) | Max tensile strength (N/mm$^2$) | Weight gain/ loss (%) |
|---|---|---|---|---|
| Oven, 10 min | 19.2 | 17.5 | 3.03 | -0.8 |
| Oven, 20 min | 17.3 | 15.7 | 2.44 | -1.0 |
| Microwave, 25s | 1.8 | 1.6 | 13.6 | -0.2 |

1B - Treatment with cold and boiling water

Moulded protein-based material dog bones were submerged in water. The samples were put in boiling water for (i) 10 or (ii) 20 minutes or (iii) were submerged in demineralized water for 24 hours at 25°C, prior to the tensile test.

This treatment resulted in substantial water uptake of the sample. However, the water did not penetrate the sample in a uniform manner for the boiled samples, resulting in limited deformability, as shown in table 2 below. The water uptake in the cold-water treatment was higher as shown in table 2 below. As a large part of the water did not evaporate during the tensile test the material sprung back close to the original length and remained in a more flexible rubbery state after the tensile test, indicative of the high amounts of water still present in the sample after the mostly elastic deformation.

The use of cold or hot water, in combination with additional heating and or drying, has clear disadvantages like long drying times and non-uniform water absorption across the thickness of the material.

Table 2 - Treatment with cold or boiling water

| Sample | Extension at break (mm) | Extension at break (%) | Max tensile strength (N/mm$^2$) | Weight gain/ loss (%) |
|---|---|---|---|---|
| Boiling 10 min | 6.1 | 5.5 | 6.6 | 18.6 |
| Boiling 20 min | 21.7 | 19.7 | 4.9 | 25.8 |
| Water submersion 24 hours | 74.6 | 67.8 | 1.7 | 49.2 |

1C - steam/hot vapour treatment (atmospheric pressure)

As the speed of heating up the sample depends on its shape and thickness and the environmental conditions, such as the presence/absence of circulation, temperature, humidity/vapour pressure and the like, a preliminary test was performed to evaluate the heating and cooling of the material. To this end, a thermocouple was placed between two moulded protein-based plates with thickness of about 2.7 mm and the setup was placed in a steam oven, in particular (i) for 10 min at 80°C with water vapour/steam addition, or (ii) 5 min at 80°C, followed by 5 min at 120 °C with water vapour/steam addition. Under these conditions, raising the temperature of the samples from 25 °C to 80 °C took about a minute. In addition, it was further observed that particularly at higher temperatures and lower vapour pressure, the moisture content of the samples was reduced.

Next, different samples of the moulded protein-based dog bones were treated with one of the following treatments, prior to the tensile test:

(i) Steam 80 °C-30 min. The material was put in the steam oven for 30 minutes. The oven was preheated to 80°C with a water vapour saturated atmosphere in the oven.
(ii) Steam 80 °C-2h. The material was put in the steam oven for 2 hours. The oven was preheated to 80°C with a water vapour saturated atmosphere in the oven.
(iii) Steam 100 °C-30 min. The material was put in the steam oven for 30 minutes. The oven was preheated to 100 °C with a water vapour saturated atmosphere in the oven.
(iv) Steam 120 °C-30 min. The material was put in the steam oven for 30 minutes. The oven was preheated to 120°C with a steam atmosphere in the oven.

The combination of heat and water vapour/steam improved moisture penetration in the material and had an improved softening effect as well, as shown in Table 3 below.

Table 3 - steam oven

| Sample | Extension at break (mm) | Extension at break (%) | Max tensile strength (N/mm$^2$) | Weight gain/loss (%) |
|---|---|---|---|---|
| Steam 80°C - 30 min | 72.7 | 66.1 | 8.4 | +2.7 |
| Steam 80°C - 2 h | 83.2 | 75.6 | 5.1 | +6.7 |
| Steam 100°C - 30 min | 88.0 | 80.0 | 5.2 | +0.8 |
| Steam 120°C - 30 min | 25.6 | 23.3 | 2.6 | -0.5 |

These results demonstrate that water absorption occurs faster at 80°C than at 100°C and that the material dries out at 120°C. A longer treatment duration at 80°C gave a more flexible material in accordance with the higher moisture absorption. Similarly, a more flexible material was also obtained at higher temperature (80 °C vs 100 °C), despite the lower moisture content. However, with further increase to 120°C the material did not result in a more flexible material, this apparently due to the dehydration of the sample.

1D - steam treatment (increased pressure)

Different samples of the moulded protein-based dog bones were treated with one of the following treatments, prior to the tensile test. The system was pressurized by first placing the sample in the pressure steamer before start of the test. After 1.5 min with the sample in the steamer, the pressure relief valve is closed and the target time starts. At the end of the treatment, the pressure relief valve is opened and after 1.5 min the steamer is unscrewed, which took about one minute. In total, the sample is in the steamer 4 minutes longer than the actual treatment time indicated below. In this context, when the pressure is released, the temperature of the sample drops, and that due to the setup, the time between steaming and performing the tensile test is a few seconds longer than with the conventional steamer.

(a) pressure steamer-BL. This is the baseline for the high-pressure steam tests. In this test, the sample is heated for 5 (total 9) minutes in a high-pressure oven, the temperature rises to 127°C and the vapour pressure of the water increased accordingly. Based on this test, the moisture absorption is significantly higher than with conventional steaming over a longer period of time, and the resulting maximum elongation is also slightly higher. The stiffness is comparable.
(b) pressure steamer-A (100°C, 5min). The sample is heated for 5 (total 9) minutes in a high-pressure oven at 100°C. In this setup, the pressure relief valve was open. Compared to the 30 minutes in a conventional steam oven, there is more water absorption, but the material is stiffer and less stretchable. Since the steam circulation is also different in this setup, in addition to the duration, the results are not completely comparable. Based on the weight increase and the resulting tensile tests, the moisture has not fully penetrated the material.
(c) pressure steamer-B (127°C, 10min). With a target treatment time of 10 minutes, the sample is heated in the pressure steamer. The pressure steamer reaches a temperature of 127°C in the first minutes and remains at this temperature for the remaining minutes until the pressure is released. Due to the overpressure, the steam can reach higher temperatures and penetrate the material more quickly.
(d) pressure steamer-C (115°C, 5 min). With a target treatment time of 5 minutes, the sample is heated in the pressure steamer. The pressure steamer reaches a temperature of 115°C in the first minutes and remains at this temperature for the remaining minutes until the pressure is released.
(e) pressure steamer-D (115°C, 2min). With a target treatment time of 2 minutes, the sample is heated in the pressure steamer. The pressure steamer reaches a temperature of 115°C in the first minutes.
(f) pressure steamer-E (127°C, 30min). With a target treatment time of 30 minutes, the sample is heated in the pressure steamer. The pressure steamer reaches a temperature of 127°C in the first minutes and remains at this temperature for the remaining minutes until the pressure is released. Because of the longer steaming time, more moisture is absorbed into the material, this ensures a material with a very low tensile strength, but the maximum elongation is not higher than at shorter times of steaming.

Due to the higher vapour pressure and temperature, the material becomes deformable faster. The increased temperature also contributes to stronger flow properties of the material, as illustrated in Table 4 below.

Table 4 - pressurized steamer

| Sample | Extension at break (mm) | Extension at break (%) | Max tensile strength (N/mm²) | Weight gain/ loss (%) |
|---|---|---|---|---|
| Pressure steamer-BL | 98.5 | 89.5 | 5.4 | +7.9 |
| Pressure steamer-A (100°C, 5min) | 73.2 | 66.5 | 7.2 | +5.2 |
| Pressure steamer-B (127°C, 10min) | 128.6 | 116.9 | 4.7 | +8.0 |
| Pressure steamer-C (115°C, 5 min) | 51.9 | 47.2 | 5.7 | +8.3 |
| Pressure steamer-D (115°C, 5 min) | 57.4 | 52.2 | 4.5 | +5.3 |
| Pressure steamer-E (127°C, 30min) | 107.3 | 97.5 | 2.5 | +17.9 |

1E - steam/hot vapour treatment (atmospheric pressure) + additional heating

Different samples of the moulded protein-based dog bones were treated with one of the following treatments, prior to the tensile test. The treatments considered in this section generally combine a hot water vapour/steam treatment step with a subsequent heating step.

(i) Steam 80°C-30 min, 120°C 4 min. The protein-based material is put in the steam oven for 30 minutes, preheated to 80°C with a water saturated atmosphere in the oven. Next, the oven is set to 120°C and 4 minutes later the sample is taken out for the tensile test.
(ii) Steam 80°C-30 min, 120°C 6 min. The protein-based material is put in the steam oven for 30 minutes, preheated to 80°C with a water saturated atmosphere in the oven. Next, the oven is set to 120°C and 6 minutes later the sample is taken out for the tensile test.
(iii) Steam 80°C-30 min, 120°C 8 min. The protein-based material is put in the steam oven for 30 minutes, preheated to 80°C with a water saturated atmosphere in the oven. Next, the oven is set to 120°C and 8 minutes later the sample is taken out for the tensile test.

In general, the softening conditions according to the setup in this section 1E resulted in similar deformation properties of the softened material as obtained in section 1D. However, as the present conditions do not require applying an overpressure, they may be more desirable and economically applicable, as illustrated in Table 5 below. In particular, further heating of the material starting from 80°C improves the flexibility of the softened material (requiring lower mechanical force to result in a higher level of elongation). This effect is less pronounced as time increases, which is in line with the positive effect on stretch of the material heating up quickly and the negative effect of the slower moisture loss.
These steam treatments influence the microscopic structure of the material. In particular, the microscopic surface roughness increases as small pores are formed allowing fast infiltration of the moisture into the material. This can be detected using Scanning Electron Microscopy or with Atomic Force Microscopy (AFM).

Table 5 - pressurized steamer

| Sample | Extension at break (mm) | Extension at break (%) | Max tensile strength (N/mm²) | Weight gain/loss (%) |
|---|---|---|---|---|
| Steam + 120°C (4 min) | 87.5 | 79.5 | 3.3 | +3.1 |
| Steam + 120°C (6 min) | 86.1 | 78.3 | 2.5 | +1.9 |
| Steam + 120°C (8 min) | 79.3 | 72.1 | 4.6 | +2.3 |

1F - protein-based materials with additional fibers

Wherein in sections 1A-1 E the protein-based material consisted of a compression-moulded commercial wheat gluten (at 150 °C), in the present section, different protein-based material compositions were evaluated.

(a) pressure steamer-BSG. This test was performed in the same way as the pressure steamer-BL above, but with a sample to which 50% brewer's spent grains (bsg) has been added, which also contains a fiber fraction. In this test, the resulting max strains are significantly lower due to the addition of the non-flexible fiber component. However, a limited deformation at temperature is still possible.
(b) pressure steamer-MG This test was performed in the same way as the pressure steamer-BL but with a sample to which 10% dried and ground *Mischantus Giganteus* grass has been added. In this test, the resulting max strains are lower than the baseline test, but higher than those at 50% bsg. Here a deformation at temperature is still possible.

These tests clearly indicate that the deformations with the fibers considered herein are more limited, which may be explained by the fact that these fibres do not stretch significantly together with the material. This is illustrated in Table 6. However, the addition of certain fibers or fillers also makes the material more impact resistant after forming. The use of these fibers and fillers can also change the look and the texture of the material, thereby making it more valuable for certain applications.

Table 6 - protein-based materials with additional fibers

| Sample | Extension at break (mm) | Extension at break (%) | Max tensile strength (N/mm$^2$) | Weight gain/ loss (%) |
|---|---|---|---|---|
| Pressure steamer-BL | 98.5 | 89.5 | 5.4 | +7.9 |
| Pressure steamer-BSG | 6.0 | 5.5 | 3.0 | +7.1 |
| Pressure steamer-MG | 27.6 | 25.1 | 2.9 | +9 |

1G - protein-based material with different forming temperature

Wherein in sections 1A-1E the protein-based material consisted of a compression-moulded commercial wheat gluten (at 150 °C), in the present section, protein-based material compositions formed at a different moulding temperature (120°C) was evaluated. pressure steamer-120WG. This test was performed in the same way as the pressure steamer-BL but with a sample where the protein-based material is obtained from a wheat gluten material formed at 120°C instead of 150°C. In this test, the resulting maximum elongations are higher than the baseline test and the material is also less stiff, as illustrated in Table 7. This demonstrates that the properties of the moulded protein-based material may be chosen so that, for certain applications, the material is less strong (and also more sensitive to water) in order to be able to achieve certain deformations.

Table 7 - protein-based material with different forming temperature

| Sample | Extension at break (mm) | Extension at break (%) | Max tensile strength (N/mm$^2$) | Weight gain/ loss (%) |
|---|---|---|---|---|
| Pressure steamer- BL | 98.5 | 89.5 | 5.4 | +7.9 |
| Pressure steamer- 120WG | 127.3 | 115.7 | 4.2 | +8.4 |

**Example 2. Thermoforming**

Several thermoforming tests were performed with thin sheets of 150°C compression moulded wheat gluten. A single hemispherical mould was used for the thermoforming. The mould contained 4 small perforations for applying the vacuum. Each sample was pressure steamed in the pressure steamer for 10 minutes (target treatment time) before the vacuum forming step (as in example 1D (c)). After taking the sample out of the pressure steamer, it was positioned on the machine and tightly clamped. Next, the mould rises to its upper position and the vacuum is applied to press the material against the mould.

Different thermoforming parameters were evaluated.

i) in cold mould, with deformation rate of 28% of maximum, and 80% vacuum. This resulted in correct deformation.

ii) mould at 75 °C, with deformation rate of 28% of maximum, and 80% vacuum. This resulted in correct deformation, but resulted in a slightly rougher material surface.

iii) mould at 85 °C, with deformation rate of 60% of maximum, 80% vacuum and additional heat radiation (infrared) at the top (45% of maximum radiation). This resulted in correct deformation, however the surface at the top of the sphere was rough and cracked, indicative of a brittle surface/material.

iv) mould at 87°C, with deformation rate of 60% of maximum, 80% vacuum, no additional heat radiation. This resulted in a correct deformation, although the surface of the shaped material was rough.

v) mould at 35°C, with deformation rate of 60% of maximum, 80% vacuum, no additional heat radiation. This resulted in a correct deformation, similar as for the experimental setup in i).

vi) mould at 35°C, maximum deformation rate, 99% vacuum, no additional heat radiation. This resulted in a correct deformation, similar as for the experimental setup in i).

These vacuum thermoforming tests indicate that the better results were obtained with a cold mould and without additional heating (by irradiation). The additional heat results in a dried surface, and crack formation during the thermoforming process. These tests thus indicate that it might be desirable to keep the atmosphere moist during the deformation in order to reduce or even completely prevent the dryness of the surface. The tests further show that the softened protein-based material reacts similarly to a rigid plastic with the additional complexity of the water content of the material influencing its characteristics prior, during and after the thermoforming process.

In addition, thermoforming tests were performed with protein-based material comprising brewer's spent grains. In line with the findings of section 1F, thermoforming was possible, but the extent of deformation was more limited than with the wheat gluten derived protein-based material. This due to the fact that the composition includes a substantial amount of fibers. The deformation was more limited than wheat gluten without additional fibers.

Other sources of protein were tested as well such as a corn protein isolate material, soy protein isolate and pea protein isolate. Moulded materials prepared based on these protein sources were formed under different conditions but all showed improved flexibility after a steam treatment (similar to the steam treatment in 1E above) and were able to retain a deformed shape after thermoforming.

**Example 3. Scanning Electron Microscopy**

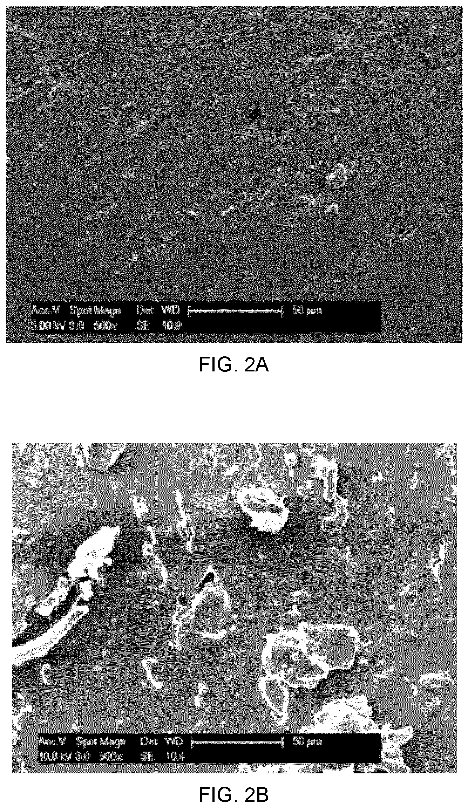

Samples were prepared as in section 1D (steam treatment with increased pressure). Three samples were analyzed by scanning electron microscopy to visualize the effects of the different process steps on the microscopic surface topography of the samples. All samples were dried at low temperatures prior to metallization for scanning electron microscopy. The different images are depicted in FIG 2A-2D.

A first sample, shown in FIG 2A, corresponds to compression-moulded commercial wheat gluten (at 150 °C). No additional treatment steps were performed after initial moulding of the protein based material. Sample 2A shows a clear flat surface with limited defects and indentations.

A second sample, shown in FIG 2B, corresponds to the softened protein-based material. In particular, the compression-moulded commercial wheat gluten of the same sheet as the first sample was subject to a steam treatment as described above for the sample pressure steamer-BL, as in section 1D (a). On the surface of sample 2B after steaming, clear bumps and pores are visible, indicative of the effect of the steam treatment.

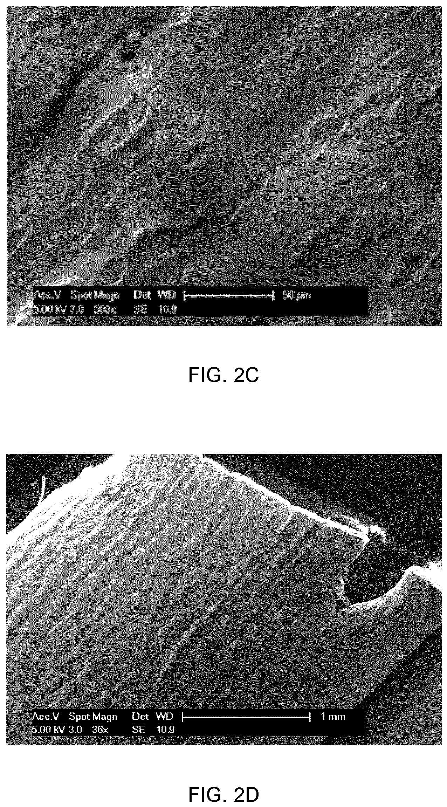

A third sample, shown in FIG 2C and 2D, from the same initially formed sheet as the first two samples, was subjected to a steam treatment as the second sample and it was subjected to a destructive tensile test (500 mm/min). Next to the effect of steaming, the stretching of the material can clearly be seen, although due to the destructive nature of the tensile test, the stretching of the material is exaggerated and shows cracks in the surface, as well as a wave form visible across the surface. Less severe surface effects can be seen on surfaces that have had less severe, non-destructive deformation after steaming.

In conclusion, the experiments described herein demonstrate that a liquid or steam treatment or other vapour infiltration of protein based moulded materials, can make the material pliable enough to be successfully thermoformed. Compared to hot and or cold liquid treatment, vapour and steam treatments result in lower water uptake, which allows faster drying, without compromising on the flexibility of the protein-based material during the hot forming process. These pliable conditions can be achieved with high pressure steaming as well as with water vapour at an elevated temperature (>60°C) and briefly heating the moist material to higher temperatures. The pre-processing of the material and its composition also have a large impact for obtaining a good thermoformable material. Lower moulding temperatures result in a more pliable material. The presence of fibers seems to limit formability to some extent, but offer other benefits like reducing crack formation in the material after forming.

It is also possible to use other volatile additives such as ethanol and other alcohols instead of water/steam. Alcohol, in particular ethanol, has the ability to dissolve particular fractions of protein material, and may thus affect the properties of the (softened) protein-based material.

### Example 4. Thermoforming with 3 wt.% of a fibre

A thermoforming test was performed with two types of thin sheets of 150°C compression moulded wheat gluten. A first sample contained no fibres or fillers. The second sample contained 3 wt.% *Mischantus Giganteus* grass with fibre lengths between 1 and 3 mm, and a fibre thickness between 0.1 mm and 0.5 mm. A single hemispherical mould was used for the thermoforming. The mould contained 4 small perforations for applying the vacuum. Each sample was pressure steamed in the pressure steamer for 10 minutes (target treatment time) before the vacuum forming step (as in example 1D (c)). After taking the sample out of the pressure steamer, it was positioned on the machine and tightly clamped. Next, the mould rises to its upper position and the vacuum is applied to press the material against the mould.

Three samples of each type where made, and stored in the same uncontrolled environment for 80 days, after which they were examined.

It was observed that the samples without any fibres or fillers contained cracks at the surface, which rendered them less strong. The samples with 3 wt.% of fibres did not contain these cracks after storage.

### Claims

1. A method for shaping a moulded or pre-formed protein-based material comprising the steps of:

> (a) providing a moulded plant protein based material in the form of a panel, board, sheet or film, wherein, in the moulded plant protein based material, plant proteins make up the matrix or continuous phase of the moulded protein-based material, and wherein the protein-fraction is non-melting under atmospheric pressure;
> (b) subjecting the moulded plant protein-based material from (a) to a treatment with a vapour having a temperature of at least 60°C, such as a water or alcoholic vapour or steam, thereby creating a softened plant protein-based material,
> (c) reshaping the softened plant protein-based material of step (b), preferably to a predetermined shape, by bending or stretching the softened plant protein-based material of step (b) into or onto a mould; wherein the moulded plant protein-based material is heated to a temperature of at least 60°C during step (a) or step (b).

2. The method according to claim 1, wherein the moulded plant protein-based material has a maximum tensile strength of at least 3 MPa, and an elongation at break of maximum 50%, according to a tensile test performed according to ISO527-2:2012.

3. The method according to claim 1 or 2 wherein the moulded plant protein-based material comprises 30-100 wt.% plant protein, 0-50 wt.% of a fibre and/or filler, and 0-20 wt.% of one or more functional additives selected from the group consisting of a cross-linking or chemical bonding agent, a colouring agent, a lubricant, an antioxidant, an antistatic agent, a biocide or a preserving agent, a plasticizer, a flame retardant or a UV stabilizer, with wt.% based on the total weight of the material.

4. The method according to any one of claims 1 to 3, wherein the method further comprises the step of preparing the moulded plant protein-based material prior to or during step (a), comprising the steps of either

> (i) preparing a plant protein-based composition with a dough-like consistency, comprising 30-100 wt.% of a plant protein source, 0-50 wt.% of a fibre and/or filler source and 0-50 wt.% water, with wt.% based on the total weight of the composition; and (ii) converting the plant protein-based composition into a moulded plant protein-based material in the form of a panel, board, sheet or film, by applying pressure and heat; or
> (i) preparing a dry protein-based composition comprising 30-100 wt.% of a plant protein source, 0-50 wt.% of a fibre and/or filler source and 0-25 wt.% water, with wt.% based on the total weight of the composition; and (ii) converting the plant protein-based composition into a moulded plant protein-based material in the form of a panel, board, sheet or film, by applying pressure and heat, and/or solvent suspension and subsequent drying.

5. The method according to any one of claims 1 to 4, wherein at least 50% of the plant protein is insoluble in water, or where the plant protein is or is derived from a cereal protein, for instance wheat or corn protein, such as commercial gluten, wheat gluten, and corn gluten, dried distilled grains and solubles (DDGS), brewer's spent grain or cereal germs; a leguminous protein, such as a meal, a flour or protein isolate from soybeans, peas or a pulse crop; or defatted oil seeds cake.

6.  The method according to claim 5, wherein the plant protein is a wheat gluten or a corn gluten.

7.  The method according to any one of claims 3 to 6 wherein the plant protein-based material comprises at least 3 wt.% of a fibre and/or a filler, particularly wherein the fibre is a cellulosic or hemicellulosic fibre, wherein the fibre is derived from vegetable material, and/or wherein the fibre is a flexible fibre, such as wool; and/or wherein the filler is carbon black or biochar, cellulosic flour such as wood flour or olive stone flour, or micro- and nano-cellulose.

8.  The method according to any one of claims 1 to 7, wherein step (b) comprises contacting the moulded protein-based material with steam, particularly with steam at a pressure above atmospheric pressure.

9.  The method according to any of claims 1 to 8, wherein step (c) comprises the steps of
c1) deforming at least a portion of the softened plant protein-based material, obtained in step b); and c2) while deformed, cooling and/or drying the softened plant protein-based material to cause retention of the shape.

10. The method according to claim 9, wherein in step c1), the temperature of the softened plant protein-based material ranges between 60 °C and 170 °C, particularly between 70 °C and 130 °C.

11. The method according to any one of claims 1 to 10, wherein the shaped material obtained in step c) has a maximum tensile strength and modulus of elasticity that deviates maximum 25% from the maximum tensile strength and modulus of elasticity of the provided moulded plant protein based material from step a).

12. The method according to any of claims 1 to 11, wherein the method comprises thermoforming by vacuum thermoforming or by pressure thermoforming.

13. A three-dimensional (3D) shaped, thermoformed plant protein-based object or product obtained by a method according to any one of claims 1 to 12, particularly wherein the 3D shaped, thermoformed protein-based object or product is obtained by shaping a steam treated moulded protein-based material.

14. The 3D shaped object or product according to claim 12 or 13, wherein the object or product is an object or product selected from the group consisting of wall panels, ceiling panels, floor panels, coat hangers, alternative for clay targets, furniture, household device components, printed circuit board substrates and other electrical device components, automotive interior panels, sports articles, gardening tools, capsules, packaging, or single use items such as trays, cups, straws, cutlery.

15. The use of the method according to any one of claims 1 to 12 for the preparation of shaped protein-based moulded articles, such as articles selected from wall panels, ceiling panels, floor panels, coat hangers, alternative for clay targets, furniture, household device components, printed circuit board substrates and other electrical device components, automotive interior panels, sports articles, gardening tools, capsules, packaging, or single use items such as trays, cups, straws, cutlery.

FIG. 1

FIG. 2A

FIG. 2B

FIG. 2C

FIG. 2D

Europäisches
Patentamt

European
Patent Office

Office européen
des brevets

# EUROPEAN SEARCH REPORT

Application Number

EP 23 16 9518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/259983 A1 (VANNI ALFREDO [IT] ET AL) 3 October 2013 (2013-10-03) * paragraphs [0005], [0006], [0016], [0060], [0071], [0087]; figures 1-6 * | 1-15 | INV. B29C51/00 B29C53/00 B29C55/00 |
| X | US 3 533 906 A (REINIGER HAIGH M) 13 October 1970 (1970-10-13) * the whole document * | 1,2,5-15 | ADD. B29C51/10 |
| X | JP 2006 062326 A (SEKISUI CHEMICAL CO LTD) 9 March 2006 (2006-03-09) * paragraphs [0021], [0025], [0026], [0035] * | 1,2,5-15 | |
| X | JP 2011 224968 A (HIROTANI:KK) 10 November 2011 (2011-11-10) * paragraphs [0001], [0002], [0047], [0058]; figure 4 * | 1,8,9 | |
| A | CN 102 712 096 A (OLYMPUS CORP) 3 October 2012 (2012-10-03) * the whole document * | 10 | |

TECHNICAL FIELDS
SEARCHED (IPC)

B29C

The present search report has been drawn up for all claims

| Place of search | Date of completion of the search | Examiner |
|---|---|---|
| Munich | 26 September 2023 | Ingelgård, Tomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 9518

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2023

| Patent document cited in search report | | | Publication date | Patent family member(s) | | | Publication date |
|---|---|---|---|---|---|---|---|
| US 2013259983 | A1 | | 03-10-2013 | AU | 2011340118 | A1 | 23-05-2013 |
| | | | | BR | 112013012647 | A2 | 06-09-2016 |
| | | | | CA | 2815446 | A1 | 14-06-2012 |
| | | | | CN | 103384486 | A | 06-11-2013 |
| | | | | EP | 2648579 | A1 | 16-10-2013 |
| | | | | ES | 2535714 | T3 | 14-05-2015 |
| | | | | IL | 226493 | A | 31-07-2016 |
| | | | | IT | 1403011 | B1 | 27-09-2013 |
| | | | | RU | 2013131793 | A | 20-01-2015 |
| | | | | US | 2013259983 | A1 | 03-10-2013 |
| | | | | WO | 2012077066 | A1 | 14-06-2012 |
| US 3533906 | A | | 13-10-1970 | NONE | | | |
| JP 2006062326 | A | | 09-03-2006 | JP | 4630607 | B2 | 09-02-2011 |
| | | | | JP | 2006062326 | A | 09-03-2006 |
| JP 2011224968 | A | | 10-11-2011 | JP | 5060613 | B2 | 31-10-2012 |
| | | | | JP | 5450722 | B2 | 26-03-2014 |
| | | | | JP | 2011224968 | A | 10-11-2011 |
| | | | | JP | 2012206515 | A | 25-10-2012 |
| CN 102712096 | A | | 03-10-2012 | CN | 102712096 | A | 03-10-2012 |
| | | | | EP | 2529906 | A1 | 05-12-2012 |
| | | | | JP | 5137980 | B2 | 06-02-2013 |
| | | | | JP | 2011152682 | A | 11-08-2011 |
| | | | | KR | 20120124422 | A | 13-11-2012 |
| | | | | US | 2013043617 | A1 | 21-02-2013 |
| | | | | WO | 2011092890 | A1 | 04-08-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6635206 B
- US 5585060 A
- US 2285758 A
- WO 2021249621 A
- WO 2013184916 A

- EP 1363974 B1
- EP 2432830 B1
- US 5665152 A
- EP 2834055 B1
- EP 3218171 B1